Europäisches Patentamt

European Patent Office

Office européen des brevets

(11) Veröffentlichungsnummer: **0 039 854**
**B1**

(12) **EUROPÄISCHE PATENTSCHRIFT**

(45) Veröffentlichungstag der Patentschrift: **30.01.85**

(51) Int. Cl.⁴: $C\ 08\ L\ 51/08$

(21) Anmeldenummer: **81103317.4**

(22) Anmeldetag: **02.05.81**

(54) **Polyvinylalkohol-Komposition, Verfahren zu ihrer Herstellung und ihre Verwendung.**

(30) Priorität: **09.05.80 DE 3017744**
**16.03.81 DE 3110166**

(43) Veröffentlichungstag der Anmeldung:
**18.11.81 Patentblatt 81/46**

(45) Bekanntmachung des Hinweises auf die
Patenterteilung:
**30.01.85 Patentblatt 85/05**

(84) Benannte Vertragsstaaten:
**AT BE CH DE FR GB IT LI NL SE**

(56) Entgegenhaltungen:
**DE-B-1 081 229**

(73) Patentinhaber: **HOECHST
AKTIENGESELLSCHAFT
Postfach 80 03 20
D-6230 Frankfurt am Main 80 (DE)**

(72) Erfinder: **Zimmermann, Wolfgang, Dr.
Im Stückes 48
D-6233 Kelkheim (Taunus) (DE)**
Erfinder: **Harréus, Albrecht, Dr.
Philipp-Kremer-Strasse 16
D-6233 Kelkheim (Taunus) (DE)**

Courier Press, Leamington Spa, England.

0 039 854

**Beschreibung**

Die Erfindung betrifft eine wasserlösliche, thermoplastische verarbeitbare, rieselfähige Polyvinylalkohol-Komposition, Verfahren zur Herstellung dieser Komposition und ihre Verwendung.

Die Herstellung wasserlöslicher, modifizierter Polyvinylalkohole (PVAL) durch Solvolyse eines Pfropfcopolymerisats von einem oder mehreren Vinylestern auf Polyalkylenglykole ist bereits bekannt (vgl. deutsche Patentschriften 10 81 229 und 10 94 457=britische Patentschriften 922 458 und 922 459). Die danach erhaltenen Produkte enthalten entweder mindestens 50 Gewichtsprozent oder weniger als 50 Gewichtsprozent Vinylalkohol-Einheiten; sie eignen sich als Material für die Herstellung welcher, leicht wasserlöslicher, klar durchsichtiger Folien, die sich sowohl aus Lösung als auch thermoplastisch verarbeiten lassen. Allerdings werden bei der Folienherstellung Verarbeitungstemperaturen von mindestens 200°C benötigt, wodurch das Material zum Teil zersetzt und verfärbt wird. Ferner ist die Polymerschmelze inhomogen, was beim Blasextrusionsverfahren zu instabilen Folienblasen führt und eine kontinuierliche Verarbeitung des Materials durch Extrusion oder Spritzgießen unmöglich macht.

Ferner ist ein weichmacherhaltiges Polyvinylalkohol-Granulat bekannt, das den Weichmacher in gleichmäßiger Verteilung enthält und überwiegend aus Partikeln mit Durchmessern im Bereich von 0,4 bis 4 mm besteht (vgl. europäische Patentveröffentlichung Nr. 4587). Dabei erfolgt das Einmischen des Weichmachers in Gegenwart einer geringen Menge Wasser, ohne daß der Polyvinylalkohol dadurch gelöst wird, und während des Mischvorgangs wird die Temperatur derart erhöht und wieder gesenkt, daß die Partikel des Polyvinylalkohols quellen und vorübergehend agglomerieren. Das bekannte Polyvinylalkohol-Granulat eignet sich zur Herstellung von Formkörpern aller Art, insbesondere Folien.

Aufgabe der Erfindung ist die Bereitstellung einer Formmasse auf der Basis von Polyvinylalkohol, die wasserlöslich und rieselfähig ist, sich in einfacher Weise und insbesondere kontinuierlich thermoplastisch verarbeiten läßt und als Material zur Herstellung von Folien geeignet ist.

Die Erfindung betrifft nun eine wasserlösliche, thermoplastisch verarbeitbare, rieselfähige Polyvinylalkohol-Komposition, die dadurch gekennzeichnet ist, daß sie aus den Komponenten a), b) und c) folgender Zusammensetzung besteht:

a) mindestens 60 Gewichtsprozent eines partiell solvolysierten Pfropfcopolymers eines Vinylesters mit einem Polyethylenglykol, das ein Molekulargewicht von 5000 bis 1 000 000 aufweist, wobei die Viskosität der 4gewichtsprozentigen wäßrigen Lösung des partiell solvolysierten Pfropfcopolymers 3 bis 40 mPa · s beträgt (gemessen bei einer Temperatur von 20°C),

b) mindestens 2 Gewichtsprozent Wasser und

c) höchstens 20 Gewichtsprozent eines mehrwertigen Alkanols mit einem Schmelzpunkt von 25 bis 100°C besteht.

Die Erfindung betrifft ferner ein Verfahren zur Herstellung einer wasserlöslichen, thermoplastisch verarbeitbaren, rieselfähigen Polyvinylalkohol-Komposition, das dadurch gekennzeichnet ist, daß

a) mindestens 60 Gewichtsteile eines in Granulatform vorliegenden, partiell solvolysierten Pfropfcopolymers eines Vinylesters mit einem Polyethylenglykol, dessen Molekulargewicht 5000 bis 1 000 000 beträgt, wobei die Viskosität der 4gewichtsprozentigen wäßrigen Lösung des partiell solvolysierten Pfropfcopolymers 3 bis 40 mPa · s beträgt (gemessen bei einer Temperatur von 20°C),

b) mindestens 2 Gewichtsteile Wasser und

c) höchstens 20 Gewichtsteile eines mehrwertigen Alkanols mit einem Schmelzpunkt von 25 bis 100°C

bei einer Temperatur von 20 bis 60°C intensiv und homogen miteinander vermischt werden.

Weiterhin betrifft die Erfindung die Verwendung einer wasserlöslichen, thermoplastisch verarbeitbaren, rieselfähigen Polyvinylalkohol-Komposition, die aus

a) mindestens 60 Gewichtsprozent eines partiell solvolysierten Pfropfcopolymers eines Vinylesters mit einem Polyethylenglykol, das ein Molekulargewicht von 5000 bis 1 000 000 aufweist, wobei die Viskosität der 4gewichtsprozentigen wäßrigen Lösung des partiell solvolysierten Pfropfcopolymers 3 bis 40 mPa · s (gemessen bei einer Temperatur von 20°C),

b) mindestens 2 Gewichtsprozent Wasser und

c) höchstens 20 Gewichtsprozent eines mehrwertigen Alkanols mit einem Schmelzpunkt von 25 bis 100°C besteht,

als Material zur Herstellung von wasserlöslichen Formkörpern, insbesondere Folien.

Eine besondere Ausbildung der Erfindung betrifft eine wasserlösliche, thermoplastisch verarbeitbare, rieselfähige Polyvinylalkohol-Komposition, die dadurch gekennzeichnet ist, daß sie besteht aus

a) 30 bis 95 Gewichtsprozent eines partiell solvolysierten Pfropfcopolymers eines Vinylesters mit einem Polyethylenglykol, das ein Molekulargewicht von 5000 bis 1 000 000 aufweist, wobei die Viskosität der 4gewichtsprozentigen wäßrigen Lösung des partiell solvolysierten Pfropfcopolymers 3 bis 40 mPa · s beträgt (gemessen bei einer Temperatur von 20°C),

b) 2 bis 40 Gewichtsprozent Wasser,

2

c) höchstens 20 Gewichtsprozent eines mehrwertigen Alkanols mit einem Schmelzpunkt von 25 bis 100°C und

d) 3 bis 60 Gewichtsprozent eines partiell solvolysierten Polyvinylesters mit einer Esterzahl von 50 bis 250 mg KOH/g, wobei die Viskosität der 4gewichtsprozentigen wäßrigen Lösung des partiell solvolysierten Polyvinylesters 3 bis 40 mPa · s beträgt (gemessen bei einer Temperatur von 20°C).

Das Verfahren zur Herstellung dieser besonderen Komposition ist analog dem vorgenannten Verfahren zur Herstellung der Komposition aus den Komponenten a), b) und c).

Das erfindungsgemäß verwendete modifizierte Pfropfcopolymer wird in bekannter Weise durch partielle Solvolyse eines Pfropfcopolymers, das durch Pfropfung eines Vinylesters oder mehrerer Vinylester auf ein Polyalkylenglykol erhalten worden ist, hergestellt (vgl. z.B. deutsche Patentschriften 10 81 229 und 10 94 457). Die Solvolyse wird zweckmäßigerweise mit einem Alkanol, insbesondere Methanol, durchgeführt (Methanolyse). Als Polyalkylenglykol wird dabei Polyethyleneglykol verwendet, das üblicherweise ein mittleres Molekulargewicht (Gewichtsmittel) von 5000 bis 1 000 000 und insbesondere von 10 000 bis 50 000 aufweist. Als Vinylester wird vor allem ein Vinylester eingesetzt, dessen Säurekomponente 2, 3 oder 4 Kohlenstoffatome aufweist, nämlich Vinylacetat, Vinylpropionat und Vinylbutyrat, Vinylacetat ist besonders bevorzugt. Der Polymerisationsgrad (Gewichtsmittel) des partiell solvolysierten Pfropfcopolymers liegt im Bereich von 300 bis 3000, vorzugsweise von 400 bis 2000. Die Viskosität der 4gewichtsprozentigen wäßrigen Lösung des partiell solvolysierten Pfropfcopolymers beträgt 3 bis 40 mPa · s, vorzugsweise 3 bis 15 mPa · s (gemessen bei einer Temperatur von 20°C).

Besonders geeignet ist ein partiell solvolysiertes Pfropfcopolymer, das 40 bis 80 Gewichtsprozent, vorzugsweise 50 bis 70 Gewichtsprozent, Vinylalkoholeinheiten, 5 bis 35 Gewichtsprozent, vorzugsweise 10 bis 30 Gewichtsprozent, Vinylacetateinheiten und 10 bis 50 Gewichtsprozent, vorzugsweise 30 bis 50 Gewichtsprozent, Ethylenoxideinheiten aufweist. Die Esterzahl des partiell solvolysierten Pfropfcopolymers liegt im Bereich von 50 bis 250 mg KOH/g, vorzugsweise 100 bis 200 mg KOH/g.

Die erfindungsgemäße PVAL-Komposition besteht aus mindestens 60 Gewichtsprozent, vorzugsweise 70 bis 95 Gewichtsprozent, des vorgenannten partiell solvolysierten Pfropfcopolymers, mindestens 2 Gewichtsprozent, vorzugsweise 2 bis 20 Gewichtsprozent, Wasser und höchstens 20 Gewichtsprozent, vorzugsweise 2 bis 20 Gewichtsprozent, eines mehrwertigen Alkanols mit einem Schmelzpunkt im Bereich von 25 bis 100°C. Die in der Komposition enthaltene Wassermenge soll bei einer Temperatur von 50°C zur Lösung des partiell solvolysierten Pfropfcopolymers nicht ausreichen.

Der erfindungsgemäß eingesetzte partiell solvolysierte Polyvinylester wird ebenfalls durch Solvolyse mit einem Alkanol, vorzugsweise Methanol, hergestellt. Als Polyvinylester eignet sich insbesondere ein Polymer eines Vinylesters mit 2, 3 oder 4 Kohlenstoffatomen in der Säurekomponente, nämlich vorzugsweise Polyvinylacetat sowie Polyvinylpropionat und Polyvinylbutyrat. Die Viskosität der 4gewichtsprozentigen wäßrigen Lösung des partiell solvolysierten Polyvinylesters beträgt 3 bis 40 mPa · s, vorzugsweise 4 bis 20 mPa · s (gemessen bei einer Temperatur von 20°C). Die Esterzahl des partiell solvolysierten Polyvinylesters liegt im Bereich von 50 bis 280 mg KOH/g, vorzugsweise 100 bis 260 mg KOH/g.

Die erfindungsgemäße PVAL-Komposition enthält ein mehrwertiges, vorzugsweise 2 bis 5 Hydroxylgruppen aufweisendes, Alkanol mit einem Schmelzpunkt von 25 bis 100°C, vorzugsweise von 50 bis 100°C. Besonders geeignete Alkanole sind verzweigte Alkanol mit 4 bis 10 Kohlenstoffatomen und 2, 3 oder 4 Hydroxylgruppen oder Polyalkyleneglykole, vorzugsweise Polyethylenglykol, mit einem mittleren Molekulargewicht (Gewichtsmittel) von 100 bis 50 000, vorzugsweise 100 bis 25 000. Weitere Beispiele sind Neopentylglykol, Pentaerythrit, Anhydroenneaheptitol und insbesondere Trimethylolpropan. Durch die Anwesenheit eines solchen Alkanols ist die thermoplastische Verarbeitbarkeit des modifizierten Pfropfcopolymers außerordentlich verbessert.

Die erfindungsgemäße PVAL-Komposition aus den Komponenten a) bis d) besteht vorzugsweise aus 35 bis 90 Gewichtsprozent des partiell solvolysierten Pfropfcopolymers, 2 bis 20 Gewichtsprozent Wasser, 2 bis 20 Gewichtsprozent des mehrwertigen Alkanols und 5 bis 50 Gewichtsprozent des partiell solvolysierten Polyvinylesters.

Ferner kann die erfindungsgemäße PVAL-Komposition noch Hilfsstoffe enthalten, die die thermoplastische Verarbeitung der Komposition erleichtern. Die Menge solcher Hilfsstoffe beträgt insgesamt höchstens 3 Gewichtsprozent, vorzugsweise 0,04 bis 1 Gewichtsprozent (bezogen auf die PVAL-Komposition). Geeignete Hilfsstoffe sind vor allem Gleitmittel wie Stearinsäure, Wachse, feinteilige organosilikonisierte Kieselsäuren, vorzugsweise pyrogene, mit Organosilanen partiell umgesetzte Kieselsäuren, sowie Erdalkalistearate, vorzugsweise Calciumstearat. Weiterhin kann die Komposition auch bekannte Antioxidantien und Farbstoffe enthalten.

Die erfindungsgemäße PVAL-Komposition wird üblicherweise durch homogenes Vermischen der einzelnen Komponenten miteinander hergestellt. Dabei werden die Komponenten a) und gegebenenfalls d) jeweils in Form eines Granulats eingesetzt, das vorzugsweise zu mindestens 70 Gewichtsprozent aus Partikeln mit einem Durchmesser von 0,2 bis 3,5 mm besteht. Besonders geeignet sind Granulate, deren Partikel zu mindestens 90 Gewichtsprozent Durchmesser von 0,2 bis 3,0 mm aufweisen. Die Polymeren a) und d) werden bei einer Temperatur von höchstens 60°C, vorzugsweise

3

höchstens 50°C, intensiv und homogen mit dem Wasser und gegebenenfalls weiteren Komponenten vermischt. Dabei ist es vorteilhaft, wenn die Temperatur des Gemisches während des Mischvorgangs derart erhöht und wieder gesenkt wird, daß die Polymer-Partikel quellen und vorübergehend agglomerieren können. Zu diesem Zweck wird die Temperatur des Gemisches, ausgehend von Raumtemperatur, kontinuierlich zunächst bis zu einem Maximum erhöht und dann wieder gesenkt, wobei sich während der Temperatursteigerung lockere Agglomerate bilden können, die nach Erreichen des Temperaturmaximums leicht wieder zerfallen. Temperaturerhöhung und Temperatursenkung werden vorzugsweise in etwa gleichen Zeiträumen durchgeführt.

Das Vermischen wird üblicherweise in einer Vorrichtung durchgeführt, die eine intensive und bleibende Durchmischung der beteiligten Komponenten gewährleistet. Besonders geeignet sind Zwangsmischer mit vertikal oder horizontal angeordnetem Rührer sowie Planetenrührwerke.

Die Mischvorrichtung ist zweckmäßigerweise mit einer Heizeinrichtung ausgerüstet. Je nach Art der Mischvorrichtung erfolgt die Temperaturerhöhung durch Friktionswärme oder Mentelheizung. Das Mischverfahren kann auch kontinuierlich durchgeführt werden, vorzugsweise in einem waagerecht liegenden Reaktionsrohr mit Schaufelrührwerk oder Schnecke sowie in einem kontinuierlich arbeitenden Kneter, jeweils ausgerüstet mit den erforderlichen Heiz- und Kühlzönen. Für den gesamten Mischvorgang wird je nach Art und Menge der Komponenten und Art der Mischvorrichtung ein Zeitraum von 3 bis 30 Minuten benötigt.

Die erfindungsgemäße PVAL-Komposition ist ohne Schwierigkeit thermoplastisch verarbeitbar, z.B. durch Pressen, Spritzgießen und Extrudieren. Sie eignet sich zur Herstellung von beliebigen Formkörpern, z.B. Platten, Rohren, Profilen, Fasern und insbesondere Folien, die sehr gut in Wasser löslich sind. Dies ist insofern überraschend, also bekanntlich höhermolekulare Polyethylenglykole mit Polyvinylalkohol nicht verträglich sind und sogar wasserunlösliche Coazervate bilden.

Ein besonderer Vorteil der erfindungsgemäßen Folien, die üblicherweise eine Dicke von 10 bis 100 $\mu$m, vorzugsweise von 20 bis 50 $\mu$m aufweisen, besteht in ihrer guten Chemikalienresistenz, so daß auch chemisch aggressive Substanzen in Behältern aus solchen Folien aufbewahrt werden können. Solche aggressiven Substanzen sind insbesondere Substanzen, die mit Wasser reagieren oder stark oxidierend oder reduzierend wirken, beispielsweise Phosphorpentachlorid, Natriumhydroxid, Natriumchlorit, Natriumdisulfit, Kaliumpermanganat, Hydroxylammoniumchlorid, Silbernitrat, Borax, Kaliumfluoborat, Glyoxalhydrat, Amidosulfonsäure und Paraformaldehyd. Diese Behälter sind vorzugsweise Beutel, die die Substanzen umhüllen und durch Zuschweißen verschließbar sind. Die Beutel werden zweckmäßigerweise jeweils in einem weiteren Beutel verpackt, der aus einer Folie aus wasserunloslichem Material besteht, vorzugsweise Polyethylen; diese Folie hat üblicherweise eine Dicke von 50 bis 200 $\mu$m, vorzugsweise 75 bis 150 $\mu$m.

Die Erfindung wird durch die nachstehenden Beispiele näher erläutert. Prozentangaben beziehen sich auf das Gewicht.

Beispiel 1

In einem 30-Liter-Zwangsmischer (Hersteller: Fa. Papenmeier, Detmold) werden 6 kg eines granulatförmigen partiell solvolysierten Pfropfcopolymers vorgelegt, das 50% Vinylalkoholeinheiten und jeweils 25% Vinylacetat- und Ethylenoxideinheiten und eine Esterzahl von 160 mg KOH/g aufweise und dessen 4prozentige wäßrige Lösung eine Viskosität von 4,0 mPa · s (gemessen bei 20°C) zeigt. Das Pfropfcopolymer besteht zu 70 Prozent aus Partikeln mit Durchmessern im Bereich von 0,3 bis 2,6 mm. Das Pfropfcopolymer wird unter Rühren vermischt mit einer 40°C warmen Lösung von 180 g Polyethylenglykol (mittleres Molekulargewicht 20 000) in 180 g Wasser, wobei die Rührgeschwindigkeit 1200 min$^{-1}$ beträgt. Nach 4 Minuten ist die Temperatur des Gemisches auf 40°C gestiegen. Nach insgesamt 5 Minuten werden in das Gemisch 36 g einer handelsüblichen, pyrogenen Kieselsäure, die partiell mit Organosilanolgruppen substituiert ist, eingerührt. Nach Erkalten resultiert ein gut rieselfähiges, nicht staubendes und nicht klebendes Granulat.

Beispiel 2

In der in Beispiel 1 beschriebenen Mischvorrichtung werden 6 kg des partiell verseiften Pfropfcopolymers gemäß Beispiel 1 vorgelegt. Das Pfropfcopolymer wird unter Rühren mit einer Lösung von 180 g Trimethylolpropan in 180 g Wasser vermischt, wobei die Rührgeschwindigkeit 600 min$^{-1}$ beträgt. Innerhalb von 5 Minuten steigt die Temperatur des Gemisches auf 45°C. Nach Erkalten resultiert ein gut rieselfähiges und nicht klebendes Granulat.

Beispiel 3

In der in Beispiel 1 beschriebenen Mischvorrichtung werden 6 kg des partiell verseiften Pfropfcopolymers gemäß Beispiel 1 vorgelegt, und unter Rühren bei einer Rührergeschwindigkeit von 600 min$^{-1}$ werden innerhalb von 1 min 360 g Wasser hinzugefügt. Innerhalb von weiteren 5 min steigt die Temperatur des Gemisches auf 50°C. Dann werden in das Gemisch 36 g der in Beispiel 1 beschriebenen Kieselsäure eingerührt. Nach Erkalten resultiert ein gut rieselfähiges, nicht staubendes und nicht klebendes Granulat.

Beispiel 4 (Anwendungsbeispiel)

Die nach Beispiel 1 erhaltene Komposition wird mit Hilfe eines handelsüblichen Extruders (25 D) bei einer Schneckenumdrehungszahl von 50 min$^{-1}$ in einem Temperaturbereich zwischen 186 und 142°C (kopf), einem Zylinderdruck von 110 bar, einem Durchsatz von 65 g · min$^{-1}$ und einer Abzugsgeschwindigkeit von 5 m · min$^{-1}$ zu einem Schlauch verarbeitet, der anschließend im Verhältnis 1:7 aufgeblasen, flach gelegt und aufgerollt wird. Es resultiert eine klar durchsichtige, nicht klebende, sehr schnell wasserlösliche Extrusionsblasfolie mit einer Dicke von 30 $\mu$m.

Beispiel 5 (Anwendungsbeispiel)

Aus der nach Beispiel 1 erhaltenen Komposition werden mit Hilfe eines handelsüblichen Sprtizgußautomaten konische Becher mit einem Gewicht von jeweils 19 g hergestellt. Die Verfahrensbedingungen sind folgende: Einspritzzeit 5 s, Nachdruckzeit 4 s, Kühlzeit 20 s, Pausenzeit 2 s, Plastifizierung 3 s, Spritzdruck 130 bar, Nachdruck 130 bar, Staudruck 40 bar, Düsenformteperatur 70°C und Auswerferformtemperatur 25°C.

Beispiel 6

In einem üblichen Zwangsmischer werden 4,8 kg eines granulatförmigen, partiell solvolysierten Pfropfcopolymers, das 50% Vinylalkoholeinheiten und jeweils 25% Vinylacetat- und Ethylenoxideinheiten aufweist und dessen 4prozentige wäßrige Lösung bei 20°C eine Viskosität von 4 mPa · s zeigt, und 1,2 kg eines granulatförmigen, partiell solvolysierten Polyvinylacetats, das eine Esterzahl von 225 mg KOH/g aufweist und dessen 4prozentige wäßrige Lösung bei 20°C eine Viskosität von 18 mPa · s zeigt, vorgelegt. Beide Polymere bestehen zu 75% aus Partikeln mit Durchmessern im Bereich von 0,3 bis 2,8 mm. Das Polymergemisch wird unter Rühren vermischt mit einer 40°C warmen Lösung von 180 g Polyethylenglykol (mittleres Molekulargewicht 20 000) in 180 g Wasser, wobei die Rührergeschwindigkeit 1200 min$^{-1}$ beträgt. Nach 4 min ist die Temperatur des Gemisches auf 40°C gestiegen. Nach insgesamt 5 min werden in das Gemisch 36 g einer handelsüblichen, pyrogenen Kieselsäure, die partiell mit Organosilanolgruppen substituiert ist, eingerührt. Nach Erkalten resultiert ein gut rieselfähiges, nicht staubendes und nicht klebendes Granulat, aus dem durch Blasextrusion eine Folie mit einer Dicke von 30 $\mu$m hergestellt wird.

Beispiel 7

Beispiel 6 wird wiederholt mit einem Gemisch aus 4 kg der partiell solvolysierten Pfropfcopolymers und 2 kg des partiell solvolysierten Polyvinylacetats. Es resultiert ein gut rieselfähiges, nicht staubendes und nicht klebendes Granulat, aus dem durch Blasextrusion eine Folie mit einer Dicke von 30 $\mu$m hergestellt wird.

Beispiel 8 (Anwendungsbeispiel)

Aus den nach den Beispielen 6 und 7 erhaltenen Folien (1) und (2) werden Beutel mit den Maßen 4 cm × 80 cm hergestellt. Die Beutel werden mit verschiedenen aggressiven Substanzen gefüllt und zugeschweißt. Als Umverpackung um diese Beutel dienen Beutel aus einer 100 $\mu$m dicken Polyethylenfolie, die ebenfalls zugeschweißt werden. Nach einer Lagerung von 4 Wochen in einem Klimaraum bei einer Temperatur von 23°C und einer relativen Luftfeuchte von 50% wird das Aussehen und die Wasserlöslichkeit der Beutel bei 20°C geprüft.

Zum Vergleich werden entsprechende Beutel aus einer Folie (3), die durch Blasextrusion eines partiell solvolysierten Polyvinylacetats (Esterzahl: 140 mg KOH/g; Viskosität der 4prozentigen wäßrigen Lösung bei 20°C: 18 mPa · s) hergestellt worden ist, mit den gleichen Substanzen gefüllt und zugeschweißt. Die Lagerung und Prüfung erfolgt entsprechend.

**0 039 854**

Die Ergebnisse sind aus der folgenden Tabelle ersichtlich

| Aggressive Substanz | Aussehen | | | Wasserlöslich-keit (min) | | |
|---|---|---|---|---|---|---|
| | (1) (2) | | (3) | (1) | (2) | (3) |
| Paraformaldehyd | unverändert | | unverändert | 5 | 5 | 15 |
| Amidosulfonsäure | „ | | „ | 5 | 5 | 15 |
| Borax | „ | | „ | 10 | 15 | unlöslich |
| Glyoxalhydrat | „ | | versprödet | 10 | 15 | „ |
| Hydroxylammoniumchlorid | „ | | unverändert | 5 | 5 | 15 |
| Kaliumfluorborat | „ | | „ | 5 | 5 | 15 |
| Kaliumpermanganat | „ | | braun | 5 | 6 | 30 |
| Natriumdisulfit | „ | | unverändert | 5 | 6 | 20 |
| Silbernitrat | braun | | braunschwarz | 6 | 7 | 30 |
| Phosphorpentachlorid | gelblich | | braun | 6 | 7 | unlöslich |
| Natriumchlorit | unverändert | | versprödet | 5 | 6 | 45 |
| Natriumhydroxid | gelb | | gelb | 5 | 7 | unlöslich |

**Patentansprüche**

1. Wasserlösliche, thermoplastisch verarbeitbare, rieselfähige Polyvinylalkohol-Komposition, bestehend aus den Komponenten a), b) und c) folgender Zusammensetzung:

a) mindestens 60 Gewichtsprozent eines partiell solvolysierten Pfropfcopolymers eines Vinylesters mit einem Polyethylenglykol, das ein Molekulargewicht von 5000 bis 1 000 000 aufweist, wobei die Viskosität der 4gewichtsprozentigen wäßrigen Lösung des partiell solvolysierten Pfropfcopolymers 3 bis 40 mPa·s beträgt (gemessen bei einer Temperatur von 20°C),

b) mindestens 2 Gewichtsprozent Wasser und

c) höchstens 20 Gewichtsprozent eines mehrwertigen Alkanols mit einem Schmelzpunkt von 25 bis 100°C.

2. Polyvinylalkohol-Komposition nach Anspruch 1, dadurch gekennzeichnet, daß das Pfropfcopolymer ein Pfropfcopolymer von Vinylacetat mit einem Polyethylenglykol ist und 40 bis 80 Gewichtsprozent Vinylalkoholeinheiten, 5 bis 35 Gewichtsprozent Vinylacetateinheiten und 10 bis 50 Gewichtsprozent Ethylenoxideinheiten aufweist.

3. Polyvinylalkohol-Komposition nach Anspruch 1, dadurch gekennzeichnet, daß das mehrwertige Alkanol ein verzweigtes Alkanol mit 4 bis 10 Kohlenstoffatomen und 2, 3 oder 4 Hydroxylgruppen oder ein Polyethylenglykol ist.

4. Verfahren zur Herstellung einer wasserlöslichen, thermoplastisch verarbeitbaren, rieselfähigen Polyvinylalkohol-Komposition, dadurch gekennzeichnet, daß

a) mindestens 60 Gewichtsteile eines in Granulatform vorliegenden, partiell solvolysierten Pfropfcopolymers eines Vinylesters mit einem Polyethylenglykol, das ein Molekulargewicht von 5000 bis 1 000 000 aufweist, wobei die Viskosität der 4gewichtsprozentigen wäßrigen Lösung des partiell solvolysierten Pfropfcopolymers 3 bis 40 mPa·s beträgt (gemessen bei einer Temperatur von 20°C),

b) mindestens 2 Gewichtsteile Wasser und

c) höchstens 20 Gewichtsteile eines mehrwertigen Alkanols mit einem Schmelzpunkt von 25 bis 100°C

bei einer Temperatur von 20 bis 60°C intensiv und homogen miteinander vermischt werden.

5. Verfahren nach Anspruch 4, dadurch gekennzeichnet, daß als partiell solvolysiertes Pfropfcopolymer ein Pfropfcopolymer verwendet wird, dessen Partikel zu mindestens 70 Gewichtsprozent Durchmesser im Bereich von 0,2 bis 3,5 mm aufweisen.

6. Wasserlösliche, thermoplastische verarbeitbare, rieselfähige Polyvinylalkohol-Komposition, bestehend aus

6

a) 30 bis 95 Gewichtsprozent eines partiell solvolysierten Pfropfcopolymers eines Vinylesters mit einem Polyethylenglykol, das eine Molekulargewicht von 5000 bis 1 000 000 aufweist, wobei die Viskosität der 4-gewichtsprozentigen wäßrigen Lösung des partiell solvolysierten Pfropfcopolymers 3 bis 40 mPa · s beträgt (gemessen bei einer Temperatur von 20°C),

b) 2 bis 40 Gewichtsprozent Wasser,

c) höchstens 20 Gewichtsprozent eines mehrwertigen Alkanols mit einem Schmelzpunkt von 25 bis 100°C und

d) 3 bis 60 Gewichtsprozent eines partiell solvolysierten Polyvinylesters mit einer Esterzahl von 50 bis 280 mg KOH/g, wobei die Viskosität der 4-gewichtsprozentigen wäßrigen Lösung des partiell solvolysierten Polyvinylesters 3 bis 40 mPa · s beträgt (gemessen bei einer Temperatur von 20°C).

7. Verfahren zur Herstellung einer wasserlöslichen, thermoplastisch verarbeitbaren, rieselfähigen Polyvinylalkohol-Komposition, dadurch gekennzeichnet, daß

a) 30 bis 95 Gewichtsteile eines in Granulatform vorliegenden partiell solvolysierten Pfropfcopolymers eines Vinylesters mit einem Polyethylenglykol, das ein Molekulargewicht von 5000 bis 1 000 000 aufweist, wobei die Viskosität der 4-gewichtsprozentigen wäßrigen Lösung des partiell solvolysierten Pfropfcopolymers 3 bis 40 mPa · s beträgt (gemessen bei einer Temperatur von 20°C),

b) 2 bis 40 Gewichtsteile Wasser,

c) höchstens 20 Gewichtsteile eines mehrwertigen Alkanols mit einem Schmelzpunkt von 25 bis 100°C und

d) 3 bis 60 Gewichtsteile eines in Granulatform vorliegenden partiell solvolysierten Polyvinylesters mit einer Esterzahl von 50 bis 280 mg KOH/g, wobei die Viskosität der 4-gewichtsprozentigen wäßrigen Lösung des partiell solvolysierten Polyvinylesters 3 bis 40 mPa · s beträgt (gemessen bei einer Temperatur von 20°C),

bei einer Temperatur von 20 bis 60°C intensiv und homogen miteinander vermischt werden.

8. Verwendung der Polyvinylalkohol-Komposition nach Anspruch 1 oder 6 als Material zur Herstellung von wasserlöslichen Formkörpern.

9. Folie, hergestellt aus der Polyvinylalkohol-Komposition nach Anspruch 1 oder 6.

10. Verwendung der Folie gemäß Anspruch 9 als Umhüllung für chemisch aggressive Substanzen.

**Revendications**

1. Composition de poly(alcool vinylique) soluble dans l'eau, pouvant subir une mise en oeuvre thermoplastique, à écoulement libre, constituée des composants a), b) et c) ayant la composition suivante:

a) au moins 60% en poids d'un copolymère greffé partiellement solvolysé d'un ester vinylique et d'un polyéthylèneglycol, ayant une masse moléculaire de 5000 à 1 000 000, la viscosité de la solution aqueuse à 4% en poids du copolymère greffé partiellement solvolysé étant de 3 à 40 mPa . s (mesurée à une température de 20°C),

b) au moins 2% en poids d'eau, et

c) au plus 20% en poids d'un polyalcanol ayant un point de fusion de 25 à 100°C.

2. Composition de poly(alcool vinylique) selon la revendication 1, caractérisée en ce que le copolymère greffé est un copolymère greffé d'acétate de vinyle et d'un polyéthylèneglycol, et qu'il présente 40 à 80% en poids d'unités alcool vinylique, 5 à 35% en poids d'unités acétate de vinyle et 10 à 50% en poids d'unités oxyde d'éthylène.

3. Composition de poly(alcool vinylique) selon la revendication 1, caractérisée en ce que le polyalcanol est un alcanol ramifié à 4 à 10 atomes de carbone et à 2, 3 ou 4 groupes hydroxyle, ou un polyéthylèneglycol.

4. Procédé pour la préparation d'une composition de poly(alcool vinylique) soluble dans l'eau, pouvant subir une mise en oeuvre thermoplastique, à écoulement libre, caractérisé en ce qu'on mélange les uns aux autres, d'une manière intense et homogène à une température de 20 à 60°C.

a) au moins 60 parties en poids d'un copolymère greffé partiellement solvolysé, se présentant sous la forme de granulés, d'un ester vinylique et d'un polyéthylèneglycol, qui présentent une masse moléculaire de 5000 à 1 000 000, la viscosité de la solution aqueuse à 4% en poids du copolymère greffé partiellement solvolysé étant de 3 à 40 mPa . s (mesurée à une température de 20°C),

b) au moins 2 parties en poids d'eau et,

c) au plus 20 parties en poids d'un polyalcanol ayant un point de fusion de 25 à 100°C.

5. Procédé selon la revendication 4, caractérisé en ce qu'on utilise en tant que copolymère greffé partiellement solvolysé un copolymère greffé dont les particules présentent pour au moins 70% en poids un diamètre compris entre 0,2 et 3,5 mm.

6. Composition de poly(alcool vinylique) soluble dans l'eau, pouvant subir une mise en oeuvre thermoplastique, à écoulement libre, comprenant

a) 30 à 95% en poids d'un copolymère greffé partiellement solvolysé d'un ester vinylique et d'un polyéthylèneglycol, qui présente une masse moléculaire de 5000 à 1 000 000, la viscosité de la solution aqueuse à 4% en poids du copolymère greffé partiellement solvolysé étant de 3 à 40 mPa . s (mesurée à une température de 20°C),

b) 2 à 40% en poids d'eau,

c) au plus 20% en poids d'un polyalcanol ayant un point de fusion de 25 à 100°C, et

d) 3 à 60% en poids d'un poly(ester vinylique) partiellement solvolysé, ayant un indice d'estérification de 50 à 280 mg KOH/g, la viscosité de la solution aqueuse à 4% en poids du poly(ester vinylique) partiellement solvolysé étant de 3 à 40 mPa . s (mesurée à une température de 20°C).

7. Procédé pour la préparation d'une composition de poly(alcool vinylique) soluble dans l'eau pouvant subir une mise en oeuvre thermoplastique, à écoulement libre, caractérisé en ce qu'on mélange d'une manière intense et homogène les uns aux autres à une température de 20 à 60°C.

a) 30 à 95 parties en poids d'un copolymère greffé partiellement solvolysé se présentant sous la forme d'un granulé, d'un ester vinylique et d'un polyéthylèneglycol présentant une masse moléculaire de 5000 à 1 000 000, la viscosité de la solution aqueuse à 4% en poids du copolymère greffé partiellement solvolysé étant de 3 à 40 mPa . s (mesurée à une température de 20°C),

b) 2 à 40 parties en poids d'eau,

c) au plus 20 parties en poids d'un polyalcanol ayant un point de fusion de 25 à 100°C et

d) 3 à 60 parties en poids d'un poly(ester vinylique) partiellement solvolysé, se présentant sous la forme de granulés, ayant un indice d'estérification de 50 à 280 mg KOH/g, la viscosité de la solution aqueuse à 4% en poids du poly(ester vinylique) partiellement solvolysé étant de 3 à 40 mPa . s (mesurée à un température de 20°C).

8. Utilisation de la composition de poly(alcool vinylique) selon la revendication 1 ou 6 en tant que matériau pour la préparation de corps façonnés solubles dans l'eau.

9. Feuille, préparée à partir de la composition de poly(alcool vinylique) selon la revendication 1 ou 6.

10. Utilisation de la feuille selon la revendication 9 en tant qu'enveloppe pour substances chimiquement agressives.

**Claims**

1. Water-soluble, flowable and thermoplastically workable polyvinyl alcohol composition consisting of the components a), b) and c) which are composed as follows:

a) at least 60 percent by weight of a partially solvolyzed graft copolymer of a vinyl ester and a polyethylene glycol having a molecular weight of from 5,000 to 1,000,000, the viscosity of the 4 percent by weight aqueous solution of the partially solvolyzed graft copolymer being of from 3 to 40 mPa · s (measured at a temperature of 20°C),

b) at least 2 percent by weight of water, and

c) at most 20 percent by weight of a polyhydric alcanol having a melting point of from 25 to 100°C.

2. The polyvinyl alcohol composition of claim 1, wherein the graft copolymer is a graft copolymer of vinyl acetate and a polyethylene glycol, having from 40 to 80 percent by weight of vinyl alcohol units, 5 to 35 percent by weight of vinyl acetate units and 10 to 50 percent by weight of ethylene oxide units.

3. The polyvinyl alcohol composition of claim 1, wherein the polyhydric alcanol is a branched alcanol having from 4 to 10 carbon atoms and 2, 3 or 4 hydroxyl groups, or a polyethylene glycol.

4. Process for the manufacture of a water-soluble, flowable and thermoplastically workable polyvinyl alcohol composition, wherein

a) at least 60 percent by weight of a granular, partially solvolyzed graft copolymer of a vinyl ester and a polyethylene glycol having a molecular weight of from 5,000 to 1,000,000, the viscosity of the 4 percent by weight aqueous solution of the partially solvolyzed graft copolymer being of from 3 to 40 mPa · s (measured at a temperature of 20°C),

b) at least 2 parts by weight of water and

c) at most 20 parts by weight of a polyhydric alcanol having a melting point of from 25 to 100°C are intensely and homogeneously mixed at a temperature of from 20 to 60°C.

5. The process of claim 4, wherein as partially solvolyzed graft copolymer a graft polymer is used, at least 70% by weight of its particles having diameters in the range of from 0.2 to 3.5 mm.

6. Water-soluble, flowable and thermoplastically workable polyvinyl alcohol composition consisting of

a) 30 to 95 percent by weight of a partially solvolyzed graft copolymer of a vinyl ester and a polyethylene glycol having a molecular weight of from 5,000 to 1,000,000, the viscosity of the 4 percent by weight aqueous solution of the partially solvolyzed graft copolymer being from 3 to 40 mPa · s (measured at a temperature of 20°C),

b) 2 to 40 percent by weight of water,

c) at most 20 percent by weight of a polyhydric alcanol having a melting point of from 25 to 100°C and

**0 039 854**

d) 3 to 60 percent by weight of a partially solvolyzed polyvinyl ester having an ester number of from 50 to 280 mg KOH/g, the viscosity of the aqueous solution of the partially solvolyzed polyvinyl ester being from 3 to 40 mPa·s (measured at a temperature of 20°C).

7. Process for the manufacture of a water-soluble, flowable and thermoplastically workable polyvinyl alcohol composition wherein

a) 30 to 95 parts by weight of a granular partially solvolyzed graft copolymer of a vinyl ester and a polyethylene glycol having a molecular weight of from 5,000 to 1,000,000, the viscosity of the 4 percent by weight aqueous solution of the partially solvolyzed graft copolymer being from 3 to 40 mPa·s (measured at a temperature of 20°C),

b) 2 to 40 parts by weight of water,

c) at most 20 parts by weight of a polyhydric alcanol having a melting point of from 25 to 100°C and

d) 3 to 60 parts by weight of a granular partially solvolyzed polyvinyl ester having an ester number of from 50 to 280 mg KOH/g, the viscosity of the 4 percent by weight aqueous solution of the partially solvolyzed polyvinyl ester being from 3 to 40 mPa·s (measured at a temperature of 20°C)

are intensely and homogeneously mixed with one another at a temperature of from 20 to 60°C.

8. Use of a polyvinyl alcohol composition as claimed in claim 1 or 6 as a material for preparing shaped articles which are soluble in water.

9. Sheet, prepared from a polyvinyl alcohol composition as claimed in claim 1 or 6.

10. Use of a sheet as claimed in claim 9 for enveloping chemically aggressive substances.

9